# FASCICULE DE BREVET EUROPEEN

(11) **EP 2 487 098 B1**
(45) Date de publication et mention de la délivrance du brevet: **29.03.2017**
(21) Numéro de dépôt: 12153661.9
(22) Date de dépôt: 02.02.2012
(51) Int. Cl.: B62M 3/08

(54) **Dispositif à pédale automatique de cycle**
Vorrichtung mit automatischem Radpedal
Device with automatic cycle pedal

(30) Priorité: 14.02.2011 FR 1151158
(43) Date de publication de la demande: 15.08.2012
(73) Titulaire: Look Cycle International, 58000 Nevers (FR)
(72) Inventeur: Cizeron, Damien, 42140 CHEVRIERES (FR); Bouchez, Julien, 45220 Saint Germain des Prés (FR)
(74) Mandataire: Laget, Jean-Loup

(56) Documents cités:
- EP-A1- 0 557 735
- EP-A1- 1 338 501
- EP-A1- 1 780 113
- US-A- 5 419 218

## Description

La présente invention est relative à un dispositif à pédale automatique avec une conformation d'accrochage pour la solidarisation d'une première conformation de solidarisation prévue sur la pédale avec une deuxième conformation de solidarisation fixée sous la semelle de la chaussure d'un cycliste

On connaît plusieurs systèmes d'accrochage de pédales automatiques.

Les systèmes à simple face d'accrochage du brevet FR 2 442 175 comportaient un bec d'accrochage fixe situé à l'avant de la pédale, et une griffe mobile située à l'arrière de ladite pédale, cette griffe étant rappelée par un organe élastique dans une position de verrouillage d'une cale fixée sous la chaussure.

Une telle pédale est également connue de la publication WO2005/016736 qui montre l'utilisation d'un organe élastique de rappel constitué par deux ressorts hélicoïdaux comprimés lors de l'enclenchement ou le déclenchement de la cale. Un autre exemple d'un organe élastique de rappel sollicité en compression est donné dans la publication US2003/066385. Cet organe élastique qui est logé dans une cale d'accrochage comporte également des ressorts hélicoïdaux qui sont comprimés par l'action de poussée sur une partie faisant saillie lors de l'enclenchement de la cale.

Plus tard, avec l'avènement du vélo tout terrain (VTT), sont apparues des pédales automatiques à double face d'accrochage, dans lesquelles les moyens de retenue comportent deux faces d'accrochage opposées de part et d'autre du corps de pédale.

En utilisant un dispositif à pédale automatique à double face d'accrochage, le cycliste n'est pas obligé de chercher le côté de la pédale pourvu des moyens de retenue de la cale, peut se rechausser rapidement et rester en équilibre tout en continuant de regarder devant lui.

Une pédale à double face d'accrochage est connue de la publication EP0557735. Cette pédale comporte un organe élastique de rappel constitué par un ressort hélicoïdal qui lors de l'enclenchement ou le déclenchement d'une cale sur la pédale est comprimé pour ensuite se détendre pour ramener la griffe mobile dans sa position initiale. Un autre exemple d'une pédale à double face d'accrochage comportant un organe élastique de rappel sollicité en compression est donné dans le brevet US6324941. Selon ce document, le moyen élastique est constitué par des ressorts de compression disposés de part et d'autre de l'axe de pédale.

La présence de boue dans ce type de pratique, et la gêne qu'elle occasionne dans le fonctionnement des systèmes d'accroche de pédales, a conduit à faciliter l'évacuation de celle-ci, en évidant au maximum les corps de pédale, ainsi qu'à améliorer l'accrochage par des organes les plus fins possible, en particulier par des organes d'accrochage en forme d'anneaux ou d'arceaux réalisés en fil métallique.

Le brevet US 6 205 885 décrit une pédale automatique pourvue de tels arceaux, centrés sur l'axe de pédale, et de quatre faces d'accrochage de la cale sur le corps de pédale, chaque face d'accrochage étant définie entre un arceau pivotant et un arceau fixe.

Le brevet FR 2 861 362 décrit une pédale automatique pourvue de tels arceaux, excentrés et disposés à la périphérie de l'axe de pédale.

Le rappel de ces arceaux ou griffes en position de verrouillage se fait le plus généralement avec des ressorts de fil métallique sollicités en flexion.

Une pédale automatique, de poids réduit et avec un faible nombre de pièces, dans laquelle l'accroche se fait sur des arceaux faisant eux-mêmes office de ressort de flexion, est décrite dans le brevet EP 0296 898.

Une autre pédale automatique, de poids réduit et avec un faible nombre de pièces, selon le préambule de la revendication 1, et dans laquelle l'accroche se fait sur des arceaux faisant eux-mêmes office de ressort de flexion, est décrite dans le brevet EP 1 780 113. Les arceaux d'accrochage sont tous indépendants les uns par rapport aux autres. Les extrémités de ces arceaux d'accrochage sont décalées l'une par rapport à l'autre, de façon à créer un encastrement et à solliciter l'arceau en flexion selon des axes de flexion décalés l'un par rapport à l'autre.

Ce genre de pédale automatique de VTT est fabriquée sous la dénomination Quartz par la société LOOK CYCLES de droit français et est présentée sur le site Internet accessible par le lien : http://www.lookcycle.com/quartz/ ou présentée en vidéo sur le site Internet accessible par le lien : http://www.youtube.com/watch?v=6brlmKvgydE&feature=related

Cette pédale fabriquée sous la dénomination QUARTZ peut cependant présenter un risque de manque de rigidité du fil d'acier faisant office de ressort de rappel et d'accrochage de la cale sur le corps de pédale. Ce risque de manque de rigidité peut entraîner des déchaussages intempestifs.

Cette pédale QUARTZ peut également présenter un risque de concentration de contraintes dans le fil d'acier faisant office de ressort de rappel et d'accrochage de la cale sur le corps de pédale, en particulier dans les coudes. Le fil d'acier faisant office de ressort de rappel et d'accrochage de la cale sur le corps de pédale vieillit plus rapidement au niveau des concentrations de contraintes et devient de moins en moins rigide.

Un but de l'invention est de remédier à ces inconvénients en proposant un nouveau dispositif à pédale automatique perfectionné de ce genre, simple à fabriquer et à assembler.

L'invention a pour objet un dispositif à pédale automatique selon la revendication 1.

Selon d'autres caractéristiques alternatives de l'invention, particulièrement avantageuses pour la pratique du vélo tout terrain :
- Le moyen élastique comporte une conformation doublement coudée et au moins une partie droite allongée constituant ledit élément sollicité en torsion.
- Le moyen élastique peut comporter deux extrémités en retour formant pivot.
- Le moyen élastique est de préférence constitué de fil recourbé aux extrémités et comportant une partie médiane sensiblement droite sollicitée en torsion.
- Le moyen élastique est monté et appliqué sur le corps de la pédale par un moyen de montage latéral.
- Le corps de la pédale porte une plaque d'appui pour l'organe d'accrochage ou la cale de retenue fixée sous la semelle de la chaussure d'un cycliste.
- La pédale comporte deux conformations en fil recourbé comportant chacune deux extrémités d'accrochage, de manière à constituer une pédale à double face d'accrochage.

Selon d'autres caractéristiques alternatives de l'invention, particulièrement avantageuses pour la pratique du vélo de route :
- Le moyen élastique comporte une barre sollicitée en torsion et montée solidaire du corps de la pédale et d'un levier formant griffe d'accrochage.
- La barre de torsion est encastrée dans le levier formant griffe d'accrochage, ou vient de matière avec le levier formant griffe d'accrochage.
- La barre de torsion est encastrée dans le corps de la pédale, ou vient de matière avec le corps de pédale.

L'invention sera mieux comprise grâce à la description qui va suivre donnée à titre d'exemple non limitatif en référence aux dessins annexés dans lesquels :
la figure 1 représente schématiquement une vue en perspective éclatée d'un premier mode de réalisation d'un dispositif à pédale automatique selon l'invention comportant deux faces d'accrochage.
La figure 2 représente schématiquement une vue en bout dans le sens de la flèche F de la figure 1 du dispositif à pédale de la figure 1, en début d'insertion de cale de retenue.
La figure 3 représente schématiquement une vue en bout dans le sens de la flèche F de la figure 1 du dispositif à pédale des figures 1 et 2, illustrant l'accrochage de la cale.
La figure 4 est une vue schématique en perspective d'une conformation d'accrochage en fil faisant partie du dispositif à pédale des figures 1 à 3.
La figure 5 représente schématiquement une vue partielle en perspective du mode de réalisation du dispositif à pédale automatique selon l'invention décrit en référence aux figures 1 à 4.
La figure 6 représente schématiquement une vue en perspective avec coupe partielle d'un deuxième mode de réalisation d'un dispositif à pédale automatique (non revendiqué) comportant une seule face d'accrochage.

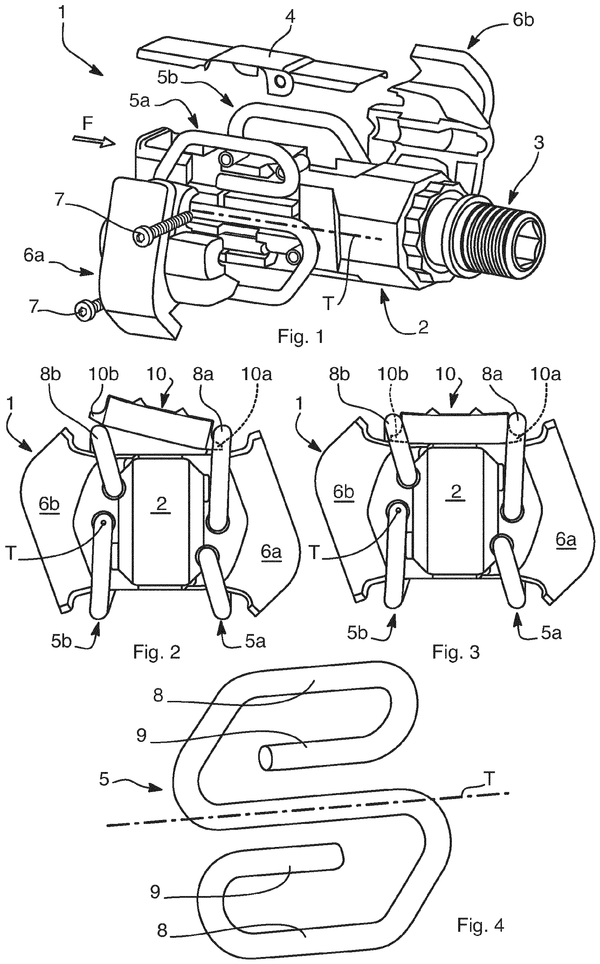

En référence aux figures 1 à 5, les éléments identiques ou fonctionnellement équivalents sont repérés par des chiffres de référence identiques.

Sur la figure 1, un dispositif à pédale automatique (1) pour la pratique du vélo tout terrain (VTT) comporte un corps (2) de pédale monté rotatif sur un axe de pédale (3), de manière connue, sur deux roulements non représentés en détail.

L'axe de pédale (3) comporte un filetage apte à coopérer avec un taraudage d'une manivelle non représentée de pédalier de cycle.

La pédale (1) comporte au moins une plaque d'appui (4) pour un organe d'accrochage ou une cale de retenue fixée sous la semelle de la chaussure d'un cycliste, non représentée.

Cette plaque d'appui (4) est montée sur le corps (2) entre deux conformations d'accrochage (5a, 5b). Les conformations d'accrochage (5a, 5b) sont montées et appliquées latéralement sur le corps de la pédale par des déflecteurs latéraux respectifs (6a, b6).

Le montage des déflecteurs (6a, 6b) est assuré par l'intermédiaire de vis (7) ou par tout autre moyen de fixation mécanique équivalent.

Chaque moyen élastique (5a, 5b) présente une conformation en S avec deux extrémités en retour formant pivot dans un logement correspondant du corps (2) de la pédale.

Chaque moyen élastique (5a, 5b) est de préférence constitué de fils recourbés aux extrémités pour constituer des conformations de retenue.

Sur la figure 2, un dispositif à pédale automatique selon l'invention est représenté en début d'insertion de la cale de retenue (10), la cale de retenue (10) étant destinée à être fixée à une chaussure de cycliste non représentée.

Un premier bec (10a) de la cale de retenue (10) est engagé sous une extrémité supérieure (8a) d'un moyen élastique (5a), tandis que le deuxième bec (10b) de la cale de retenue (10) est destiné à être appliqué vers le bas pour écarter une conformation (8b) supérieure du deuxième moyen élastique (5b), pour encliqueter le deuxième bec (10b) sous cette extrémité d'accrochage (8b) du moyen élastique (5b).

La pression du bec (10b) de la cale de retenue (10) produit un effort sur l'extrémité (8b). Cet effort est transmis à la conformation en fil et provoque un effet de torsion autour de l'axe (T) sur la partie médiane de l'élément constituant le moyen élastique (5b).

Sur la figure 3, la cale de retenue (10) est représentée en position d'accrochage sur la pédale automatique (1) selon l'invention.

Les becs (10a, 10b) sont engagés sous les extrémités (8a, 8b) d'accrochage des moyens élastiques (5a, 5b).

L'effet de torsion autour de l'axe (T) est transmis à l'extrémité (8b) d'accrochage et empêche le dégagement de la cale de retenue (10).

La pédale automatique représentée aux figures 1 à 3 est une pédale automatique à deux faces de retenue, en raison du fait que les moyens élastiques (5a, 5b) comportent deux faces actives de part et d'autre du plan médian de la pédale automatique (1).

Sur la figure 4, un moyen élastique (5) comporte une extrémité inférieure d'accrochage (8) et une extrémité supérieure d'accrochage (8).

Les extrémités d'accrochage (8) sont prolongées par des extrémités (9) formant pivot destinées à être montées dans des logements correspondants du corps (2) d'une pédale non représentée en totalité.

La partie médiane du moyen élastique (5) constitue un élément sensiblement allongé en forme de barre d'axe (T). L'axe (T) de l'élément (5) constitue un axe de torsion élastique permettant un mouvement relatif entre l'extrémité d'accrochage supérieure (8) et l'extrémité inférieure d'accrochage (8) du moyen élastique (5).

De préférence, le plan défini par l'axe (T) de torsion et l'extrémité supérieure (8) de retenue d'une cale forment un dièdre avec le plan défini par l'axe (T) de torsion et l'extrémité inférieure (8) de retenue de la cale sous la pédale.

Les extrémités en retour (9) sont de préférence montées de manière pivotante sur le corps (2) de la pédale.

Dans l'exemple représenté aux figures 1 à 5, les conformations en fil constituant un moyen élastique (5) sont au nombre de deux, dont les extrémités d'accrochage (8) définissent une pédale à double face d'accrochage.

Chaque face d'accrochage de la pédale correspond aux extrémités supérieures (8) de préhension des moyens élastiques (5a, 5b), tandis que l'autre face d'accrochage correspond aux extrémités inférieures (8) des moyens élastiques (5a, 5b).

Les extrémités recourbées (9) formant pivot autorisent un déplacement des extrémités supérieures (8) de préhension des moyens élastiques (5a, 5b), moyennant l'application d'un effort de torsion selon l'axe (T) de la partie médiane allongée orientée selon l'axe de symétrie du moyen élastique (5a ou 5b).

Chaque moyen élastique (5, 5a, 5b) est constitué par un fil globalement en forme de S présentant une partie centrale s'étendant sensiblement parallèlement à l'axe (3) de pédale.

Cette partie centrale d'axe (T), s'étend sensiblement parallèlement à l'axe (3) de pédale, et est reliée par quatre parties coudées aux extrémités (9) en retour formant pivot hyperstatique.

Ces extrémités (9) en retour formant pivot hyperstatique sont montées dans des conformations appropriées du corps (2) de pédale.

Les extrémités (9) formant pivot s'étendent parallèlement à la partie centrale de torsion selon l'axe (T) et s'étendent également sensiblement parallèlement à l'axe du corps (2) de pédale.

Le fil de chaque conformation en S est de préférence constitué en un matériau élastique, tel que l'acier, mais peut aussi être constitué par un élastomère, un plastique, un plastique chargé fibre, ou analogue, pour utiliser l'élasticité propre du matériau constitutif et permettre une torsion autour de l'axe (T).

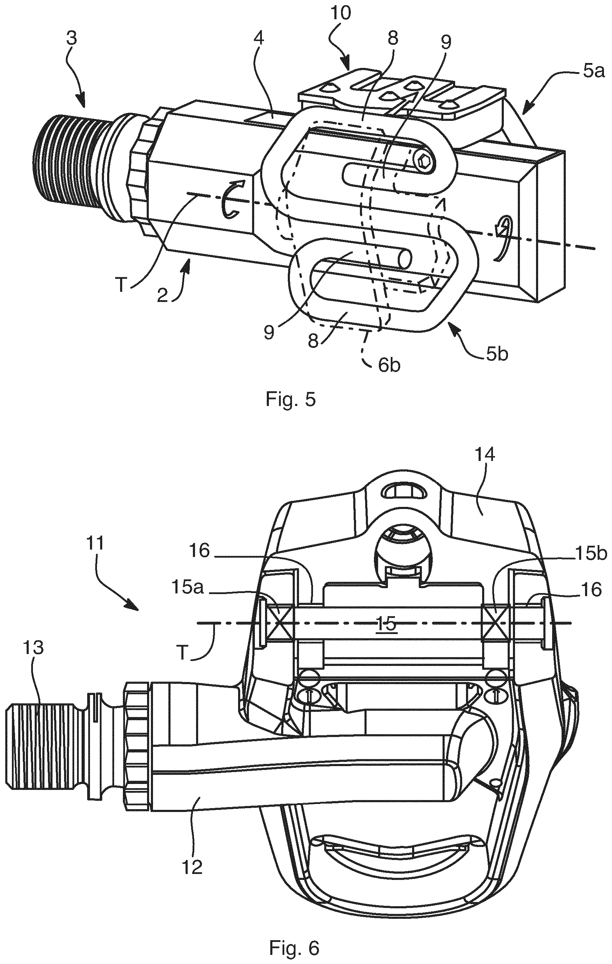

Sur la figure 5, les moyens élastiques (5a, 5b) sont représentés en position par rapport au corps (2) de pédale.

Les déflecteurs (6a, 6b) d'application et de montage des moyens élastiques (5a, 5b) sont représentés en traits interrompus par souci de clarté.

Une pédale automatique selon l'invention décrite en référence aux figures 1 à 5 comporte sept pièces constitutives principales : les déflecteurs (6a, 6b) représentés en traits interrompus, le corps (2) de pédale, deux plaques (4) d'appui et les moyens élastiques (5a, 5b) décrits en référence aux figures 1 à 4.

Lors de l'écartement d'une partie (8) de préhension par une cale (10), le dièdre formé autour de l'axe (T) de torsion se déforme, de manière à former un dièdre ouvert, en exerçant ainsi une torsion antagoniste le long de l'axe (T).

Après engagement des becs de retenue de la cale (10) sous les extrémités de préhension (8), le dièdre formé autour de l'axe (T) revient dans sa position initiale et retient la cale (10) en position pour solidariser la chaussure du cycliste à la pédale automatique selon l'invention.

Lors du déchaussage, une rotation de la cale de retenue (10) provoque un écartement des extrémités (8) de préhension et permet la libération de la cale de retenue (10) et le dégagement de la chaussure du cycliste.

Sur la figure 6, un deuxième mode de réalisation de dispositif à pédale automatique (non revendiqué) est particulièrement avantageux pour la pratique du cyclisme sur route.

Dans ce mode de réalisation, un dispositif à pédale (11) automatique de vélo sur route est représentée avec son corps (12) monté à rotation sur un axe (13) de pédale, de manière connue en soi par l'intermédiaire de roulements non représentés en détail.

L'axe (13) comporte à une extrémité un filetage apte à coopérer avec un taraudage sur une manivelle de pédalier de cycle non représentée.

Le corps (12) de pédale porte un levier (14) formant griffe de retenue ou d'accrochage pour une cale de retenue non représentée.

L'organe de retenue (14) est monté solidaire d'un moyen élastique (15) comportant une partie droite allongée formant barre de torsion sollicitée en torsion autour d'un axe (T).

Le moyen élastique (15) formant barre de torsion autour de l'axe (T) est de préférence monté solidaire du corps (12) de la pédale et du levier (14) formant griffe d'accrochage. La barre (15) de torsion peut venir de matière avec le levier (14) formant griffe d'accrochage et/ou venir de matière avec le corps (12) de la pédale.

Dans l'exemple représenté, la barre de torsion (15) est encastrée dans le levier (14) au moyen d'une conformation empêchant la rotation, par exemple une conformation (15b) en barreau de forme carrée.

Selon une variante non représentée de l'invention, la barre de torsion (15) peut être encastrée par collage dans la griffe d'accrochage (14).

La barre de torsion (15) est également encastrée dans le corps (12) de la pédale de manière à empêcher sa rotation à l'emplacement d'encastrement, par exemple au moyen d'une conformation empêchant la rotation, par exemple une conformation (15a) en barreau de forme carrée.

Dans l'exemple représenté, la barre de torsion (15) est encastrée à l'emplacement (15a) dans le corps (12) de la pédale automatique selon l'invention, et cette barre (15) de torsion est également encastrée à l'emplacement (15b) dans la griffe (14) d'accrochage.

Les emplacements (16) correspondent à une liberté de pivotement relatif, dans le corps de la pédale (12) et dans la griffe (14) d'accrochage.

Ainsi, lorsqu'une cale de retenue vient provoquer la rotation de la griffe d'accrochage (14), une torsion se produit entre les extrémités (15a, 15b) d'encastrement dans le sens antagoniste à la position de montage, pour écarter la griffe d'accrochage (14) et permettre l'insertion de la cale de retenue.

Après insertion de la cale de retenue, la précontrainte dans la barre de torsion (15) assure le verrouillage de la griffe d'accrochage (14) sur la cale de retenue de la chaussure de cycliste.

La rotation de la cale de retenue écarte ainsi la griffe d'accrochage (14) en produisant une torsion antagoniste autour de l'axe (T), pour libérer la chaussure du cycliste.

L'invention décrite en référence à un modes de réalisation particulier ne lui est nullement limitée, mais couvre au contraire toute modification de forme et toute variante de réalisation dans le cadre des revendications annexées, l'essentiel étant que le moyen élastique permettant la mobilité et assurant l'effort de retenue de la conformation d'accrochage comporte un élément sollicité en torsion.

L'élément sollicité en torsion est de préférence constitué en un matériau élastique, tel que l'acier, un élastomère, un plastique, un plastique chargé fibre, ou analogue, pour utiliser l'élasticité propre du matériau constitutif et permettre une torsion autour d'un axe (T) de torsion.

Selon une variante non représentée, le dispositif à pédale automatique présente une conformation d'accrochage fixée sous la semelle de la chaussure d'un cycliste, ladite conformation d'accrochage comportant au moins une partie mobile précontrainte en position d'accrochage par le moyen élastique qui comporte l'élément sollicité en torsion.

## Revendications

1. Dispositif à pédale automatique (1) avec une conformation d'accrochage (8) pour la solidarisation d'une première conformation de solidarisation prévue sur la pédale avec une deuxième conformation de solidarisation fixée sous la semelle de la chaussure d'un cycliste, ladite conformation d'accrochage comportant au moins une partie mobile précontrainte en position d'accrochage (8) par un moyen élastique (5, 5a, 5b), le moyen élastique (5, 5a, 5b) comportant au moins une partie droite allongée constituant un élément sollicité en torsion (T), **caractérisé par le fait que** le moyen élastique (5, 5a, 5b) comporte une conformation en S, dont la partie médiane constitue ledit élément sollicité en torsion (T).

2. Dispositif à pédale automatique (1) selon la revendication 1, dans lequel la conformation d'accrochage (8) est solidaire d'une pédale, ladite conformation d'accrochage (8) comportant au moins une partie mobile précontrainte en position d'accrochage par le moyen élastique qui comporte l'élément sollicité en torsion.

3. Dispositif à pédale automatique selon la revendication 1, dans lequel la conformation d'accrochage est fixée sous la semelle de la chaussure d'un cycliste, ladite conformation d'accrochage comportant au moins une partie mobile précontrainte en position d'accrochage par le moyen élastique qui comporte l'élément sollicité en torsion.

4. Dispositif à pédale automatique (1) selon la revendication 1, **caractérisée par le fait que** le moyen élastique (5, 5a, 5b) comporte une conformation doublement coudée et au moins une partie droite allongée constituant ledit élément sollicité en torsion (T).

5. Dispositif à pédale automatique (1) selon la revendication 1 ou la revendication 4, **caractérisée par le fait que** le moyen élastique (5, 5a, 5b) comporte au moins une extrémité en retour formant pivot (9).

6. Dispositif à pédale automatique selon l'une quelconque des revendications 1, 4 ou 5, **caractérisée par le fait que** le moyen élastique (5, 5a, 5b) est constitué de fil recourbé aux extrémités et comportant une partie médiane sensiblement droite sollicitée en torsion (T).

7. Dispositif à pédale automatique (1) selon la revendication 6, **caractérisée par le fait que** le moyen élastique (5, 5a, 5b) est monté et appliqué sur le corps (2) de la pédale automatique (1) par un moyen de montage latéral (6a, 6b).

8. Dispositif à pédale automatique (1) selon la revendication 6 ou la revendication 7, **caractérisée par le fait que** le corps (2) de la pédale automatique (1) porte au moins une plaque d'appui (4) pour l'organe d'accrochage ou la cale (10) de retenue fixée sous la semelle de la chaussure d'un cycliste.

9. Dispositif à pédale automatique (1) selon l'une quelconque des revendications 6 à 8, **caractérisée par le fait que** la pédale (1) comporte deux conformations (5a, 5b) en fil recourbé comportant chacune deux extrémités (8a, 8b) d'accrochage, de manière à constituer une pédale à double face d'accrochage.

## Patentansprüche

1. Vorrichtung mit automatischem Pedal (1) mit einer Haltekonformation (8) für die feste Verbindung einer ersten, auf dem Pedal vorgesehenen Verbindungskonformation mit einer zweiten, unter der Sohle des Schuhs eines Radfahrers befestigten Verbindungskonformation, wobei die Haltekonformation mindestens einen von einem elastischen Mittel (5, 5a, 5b) in Halteposition (8) vorgespannten mobilen Teil aufweist, wobei das elastische Mittel (5, 5a, 5b) mindestens einen geraden länglichen Teil aufweist, der ein Element mit Torsionsbeanspruchung (T) darstellt, **dadurch gekennzeichnet, dass** das elastische Mittel (5, 5a, 5b) eine S-Konformation aufweist, deren mittlerer Teil das Element mit Torsionsbeanspruchung (T) darstellt.

2. Vorrichtung mit automatischem Pedal (1) nach Anspruch 1, wobei die Haltekonformation (8) mit einem Pedal fest verbunden ist, wobei die Haltekonformation (8) mindestens einen von dem elastischen Mittel, das das Element mit Torsionsbeanspruchung aufweist, in Halteposition vorgespannten mobilen Teil aufweist.

3. Vorrichtung mit automatischem Pedal nach Anspruch 1, wobei die Haltekonformation unter der Sohle des Schuhs eines Radfahrers befestigt ist, wobei die Haltekonformation mindestens einen von dem elastischen Mittel, das das Element mit Torsionsbeanspruchung aufweist, in Halteposition vorgespannten mobilen Teil aufweist.

4. Vorrichtung mit automatischem Pedal (1) nach Anspruch 1, **dadurch gekennzeichnet, dass** das elastische Mittel (5, 5a, 5b) eine doppelt gekrümmte Konformation und mindestens einen geraden länglichen Teil aufweist, der das Element mit Torsionsbeanspruchung (T) darstellt.

5. Vorrichtung mit automatischem Pedal (1) nach Anspruch 1 oder Anspruch 4, **dadurch gekennzeichnet, dass** das elastische Mittel (5, 5a, 5b) mindestens ein Rücksprungende aufweist, das einen Zapfen (9) bildet.

6. Vorrichtung mit automatischem Pedal nach einem der Ansprüche 1, 4 oder 5, **dadurch gekennzeichnet, dass** das elastische Mittel (5, 5a, 5b) von einem an den Enden gekrümmten Draht gebildet ist und einen etwa geraden mittleren Teil mit Torsionsbeanspruchung (T) aufweist.

7. Vorrichtung mit automatischem Pedal (1) nach Anspruch 6, **dadurch gekennzeichnet, dass** das elastische Mittel (5, 5a, 5b) auf dem Körper (2) des automatischen Pedals (1) von einem seitlichen Montagemittel (6a, 6b) montiert und angebracht ist.

8. Vorrichtung mit automatischem Pedal (1) nach Anspruch 6 oder Anspruch 7, **dadurch gekennzeichnet, dass** der Körper (2) des automatischen Pedals (1) mindestens eine Stützplatte (4) für das Halteorgan oder den Haltekeil (10) trägt, der unter der Sohle des Schuhs eines Radfahrers befestigt ist.

9. Vorrichtung mit automatischem Pedal (1) nach einem der Ansprüche 6 bis 8, **dadurch gekennzeichnet, dass** das Pedal (1) zwei gekrümmte Drahtkonformationen (5a, 5b) aufweist, die jeweils zwei Halteenden (8a, 8b) aufweisen, so dass ein Pedal mit doppelter Haltefläche gebildet ist.

## Claims

1. An automatic pedal device (1) with an attachment formation (8) for securing a first securing formation provided on the pedal with a second securing formation fastened below the sole of a cyclist's shoe, said attachment formation including at least one moving part pre-stressed in the attachment position (8) by an elastic means (5, 5a, 5b), the elastic means (5, 5a, 5b) including at least one elongated straight part making up a torsionally stressed element (T), **characterized in that** the elastic means (5, 5a, 5b) includes an S-shaped formation, the median part of which constitutes said torsionally stressed element (T).

2. The automatic pedal device (1) according to claim 1, wherein the attachment formation (8) is secured to a pedal, said attachment formation (8) including at least one moving part pre-stressed in the attachment position by the elastic means that includes the torsionally stressed element.

3. The automatic pedal device according to claim 1, wherein the attachment formation is fastened below the sole of a cyclist's shoe, said attachment formation including at least one moving part pre-stressed in the attachment position by the elastic means that includes the torsionally stressed element.

4. The automatic pedal device (1) according to claim 1, **characterized in that** the elastic means (5, 5a, 5b) includes a bent lining formation and at least one elongated straight part constituting the torsionally stressed element (T).

5. The automatic pedal device (1) according to claim 1 or claim 4, **characterized in that** the elastic means (5, 5a, 5b) includes at least one return end forming a pivot (9).

6. The automatic pedal device according to any one of claims 1, 4 or 5, **characterized in that** the elastic means (5, 5a, 5b) is made up of wire bent at the ends and including a torsionally stressed substantially straight median part (T).

7. The automatic pedal device (1) according to claim 6, **characterized in that** the elastic means (5, 5a, 5b) is mounted and pressed on the body (2) of the automatic pedal (1) by a lateral mounting means (6a, 6b).

8. The automatic pedal device (1) according to claim 6 or claim 7, **characterized in that** the body (2) of the automatic pedal device (1) bears at least one support plate (4) for the attachment member or the retaining wedge (10) fastened below the sole of a cyclist's shoe.

9. The automatic pedal device (1) according to any one of claims 6 to 8, **characterized in that** the pedal (1) includes two wire formations (5a, 5b) each including two attachments (8a, 8b), so as to form a double-sided attachment pedal.
